# EUROPÄISCHE PATENTSCHRIFT

(11) **EP 1 853 827 B1**
(45) Veröffentlichungstag und Bekanntmachung des Hinweises auf die Patenterteilung: **09.02.2011**
(21) Anmeldenummer: 06708540.7
(22) Anmeldetag: 27.02.2006
(51) Int. Cl.: F16B 7/18, F16B 13/08

(54) **PROFILVERBINDER**
PROFILE CONNECTOR
CONNECTEUR DE PROFILES

(30) Priorität: 03.03.2005 DE 202005003394 U
(43) Veröffentlichungstag der Anmeldung: 14.11.2007
(73) Patentinhaber: RK Rose + Krieger GmbH Verbindungs- und Positioniersysteme, 32423 Minden (DE)
(72) Erfinder: HEINZEL, Bernd, 32457 Porta Westfakuca (DE); SCHUNKE, Kurt, 32427 Minden (DE); BUCHHOLZ, Bernd, 33824 Werther (DE)
(74) Vertreter: Dantz, Jan Henning
(86) Internationale Anmeldenummer: PCT/EP2006/060310
(87) Internationale Veröffentlichungsnummer: WO 2006/092391

(56) Entgegenhaltungen:
- WO-A-2004/067972
- DE-A1- 4 142 273

## Beschreibung

Die vorliegende Erfindung betrifft einen Profilverbinder entsprechend dem Oberbegriff des Anspruchs 1 (WO 2004/067972 A).

Es sind Profilverbinder bekannt, um beispielsweise winklig zueinander stehende Profilstäbe miteinander zu verbinden. So ist in der EP 460 360 B1 ein solcher Profilverbinder gezeigt und beschrieben, der sich in seiner Funktion durchaus bewährt hat. Dabei ist die Anschlussleiste über stirnseitig in Schraubkanäle des ersten Profilstabes eingedrehte Schrauben festgelegt, während der zweite, an der Stirnseite des ersten mit einer Längsseite anliegende Profilstab durch Nutsteine, die eine hinterschnittene Längsnut hintergreifen, mit der Anschlussleiste verbunden ist, wobei über Klemmschrauben, die durch die Anschlussleiste geführt und in die Nutsteine eingedreht sind, gegen Hinterschnittschulter der Längsnut gepresst sind, so dass eine feste Klemmung beider Profilstäbe gegen einander erreicht wird.

Die Klemmschrauben liegen mit ihren Köpfen in Längsnuten des ersten Profilstabes und sind nur dadurch betätigbar, dass ein entsprechendes Werkzeug in die Längsnuten eintauchen kann.

Allerdings kann dieser Profilverbinder nicht eingesetzt werden bei einem ersten Profilstab, dessen Außenseiten geschlossen sind, das heißt der keine Längsnuten aufweist, zur Aufnahme der Köpfe der Klemmschrauben, so dass zu deren Befestigung in jeder Hinsicht unbefriedigende Profilverbinder eingesetzt werden müssen, die beispielsweise aus an den entsprechenden Außenwänden des ersten Profilstabes anliegenden Winkeln bestehen, die mit dem ersten Profilstab über quer geführte Schrauben verbunden sind.

Neben dem sich daraus ergebenden erheblichen Herstellungs- und Montageaufwand stellen diese Profilverbinder auch in gestalterischer Hinsicht lediglich eine unbefriedigende Notlösung dar.

Neben der Verbindung zweier winklig zueinander stehender Profilstäbe werden Profilstäbe auch parallel miteinander verbunden, das heißt, sie werden sozusagen aufgedoppelt, wobei sie längsseitig aneinander liegen.

Ein dafür eingesetzter als Parallelverbinder bezeichneter Profilverbinder ist aus der DE 201 15 618 U1 bekannt.

Allerdings ist mit diesem Profilverbinder lediglich eine wenig belastbare Verbindung möglich, da, insbesondere bei üblicherweise vorhandenen profilsseitigen Toleranzen eine absolut sichere und feste Klemmung nicht gewährleistet ist.

Darüber hinaus ist dieser Profilverbinder auch nur als Parallelverbinder einsetzbar. Verbindungen, bei denen die Profilstäbe winklig aufeinander stehen oder winklig zueinander verlaufen sind damit nicht möglich.

Um Parallelverbinder eine sichere Verbindung in jedem Fall zu gewährleisten, werden Profilstäbe durch Verschrauben miteinander verbunden, wozu jedoch in jedem Fall Löcher durch die Seitenwandungen der Profilstäbe gebohrt werden müssen. Naturgemäß ist dies mit einem erheblichen Arbeitsaufwand verbunden, der einer wirtschaftlichen Montage entgegensteht. Dies trifft gleichermaßen für Verbindungen von Profilstäben zu, bei denen die Längsseiten der beiden Profilstäbe sich kreuzend aneinander liegen, wobei hier eine Verbindung ausschließlich durch Verschrauben möglich ist.

Der vorliegenden Erfindung liegt die Aufgabe zugrunde, einen Profilverbinder der gattungsgemäßen Art so weiter zu entwickeln, dass seine Verwendungsfähigkeit verbessert und die Verbindung zweier Profilstäbe erleichtert wird.

Diese Aufgabe wird durch einen Profilverbinder gelöst, der die Merkmale des Anspruchs 1 aufweist.

Ein solcher Art ausgebildeter Profilverbinder zeichnet sich zunächst einmal durch seine quasi universelle Einsetzbarkeit aus. Dabei kann er zwei Profilstäbe sowohl parallel wie auch über Kreuz aneinander liegend miteinander verbinden, ebenso wie eine Konfiguration, bei der ein erster Profilstab stirnseitig an der Längsseite des zweiten Profilstabes anliegt.

Neben dieser gegenüber dem Stand der Technik erheblich verbesserten Verwendungsfähigkeit, zeichnet er sich durch eine sehr einfache Montage aus, das heißt, zwei Profilstäbe sind innerhalb kurzer Zeit miteinander zu verbinden, ohne dass Vorarbeiten jeglicher Art erforderlich sind.

Nach einer bevorzugten Weiterbildung der Erfindung weist die Anschlussleiste ebenso wie der Nutstein Klemmkragen auf, die sich in Funktionsstellung klemmend an Hinterschnittschultern einer Längsnut des ersten Profilstabes abstützen, der parallel auf dem zweiten Profilstab aufliegt.

Durch die aneinander liegenden Schrägen des Nutsteines einerseits und der Anschlussleiste andererseits werden beide bei Festdrehen der Schraube so aufeinander zu verschoben, dass ihre Klemmkragen jeweils fest an die zugeordneten Hinterschnittschultern angepresst werden. Dabei ist durch die in Klemmrichtung vorzugsweise im Querschnitt langlochförmige Durchgangsbohrung des Nutsteines dessen Relativbewegung zur Anschlussleiste beim Verspannen beider Teile gewährleistet. Selbstverständlich kann in funktionaler Umkehrung auch der Nutstein mit einer Gewindebohrung versehen sein und die Anschlussleiste mit einer entsprechend geformten Durchgangsbohrung.

Bei dieser Ausführungsvariante ist nach einem weiteren Gedanken der Erfindung vorgesehen, dass sich die Klemmkragen der Anschlussleiste und des Nutsteines zumindest bereichsweise überlappen. Hierdurch ist die Kraftübertragung beim Festklemmen des Profilverbinders insgesamt optimiert.

Zur Querverbindung zweier Profilstäbe können die Klemmkragen der Anschlussleiste quer zu den Klemmkragen des Nutsteines verlaufen. Die Anschlussleiste wird im Sinne eines Nutsteines in die Längsnut des ersten Profilstabes eingeführt und mit der Schräge des Nutsteines in Kontakt gebracht und über die Schraube verspannt.

Zur stirnseitigen Verbindung des ersten Profilstabes an einer Längsseite des zweiten Profilstabes, entsprechend der in der Beschreibungseinleitung zitierten EP 460 360 B1, wird die Anschlussleiste mit Schrauben stirnseitig am ersten Profilstab festgelegt, wobei diese Schrauben in Schraubkanäle des ersten Profilstabes eingedreht sind.

Beidseitig liegt an den stirnseitig vorgesehenen Schrägen der Anschlussleiste jeweils ein Nutstein mit einer daran angepassten Schräge an, der in einer Längsnut des zweiten Profilstabes geführt ist und durch in die Anschlussleiste eingedrehte Schraube verspannt wird.

Die Anschlussleiste nimmt somit die Form eines Trapezkörpers ein, dessen kürzere Deckfläche an der Stirnseite des ersten Profilstabes anliegt.

Prinzipiell kann der Nutstein für eine nachträgliche Montage entlang der durch die Durchgangsbohrung definierten Längsachse geteilt sein, so dass zwei Hälften entstehen, die nacheinander von der Schlitzseite in die Längsnut einführbar sind. Dies ist dann eine sinnvolle Möglichkeit der Montage, wenn der stirnseitige Zugang zum Einschieben des Nutsteines in die Längsnut nicht frei ist, wie dies beispielsweise bei einem bereits montierten Profilstab der Fall sein kann.

Grundsätzlich ergibt sich durch die konstruktive Ausbildung des neuen Profilverbinders eine außerordentlich günstige Krafteinleitung mit einer entsprechend hohen Belastungsfähigkeit des Gesamtsystems.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 bis 5: einen Profilverbinder zum Verbinden zweier parallel zueinander angeordneter Profilstäbe in verschiedenen Ansichten
- Figuren 6 u. 7: einen Profilverbinder zum Verbinden zweier quer zueinander ver- laufender Profilstäbe, ebenfalls in unterschiedlichen Ansichten
- Figuren 8 bis 10: ein weiteres Ausrührungsbeispiel eines Profilverbinders, hier zum Verbinden zweier winklig zueinander stehender Profilstäbe

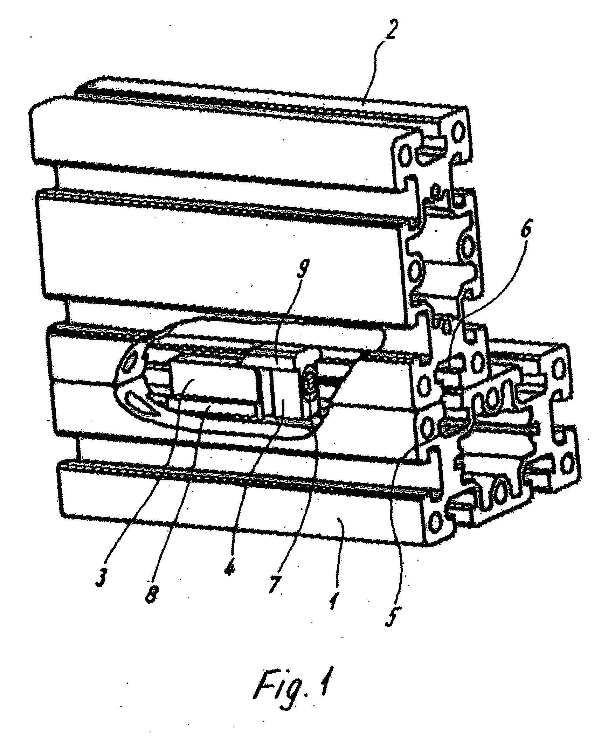

In den Figuren 1 bis 5 ist ein Profilverbinder erkennbar, mit dem zwei parallel zueinander verlaufende, längsseitig aneinander liegende Profilstäbe 1, 2 miteinander verbunden sind. Dabei weisen beide Profilstäbe 1, 2 hinterschnittene Längsnuten 5, 6 auf, in die der Profilverbinder eingesteckt ist.

Dieser besteht aus einer in die Längsnut 5 des ersten Profilstabes 1 eingesteckten Anschlussleiste 3 und einem in die Längsnut 6 des zweiten Profilstabes 2 eingesteckten Nutstein 4, die durch eine sich in Längsachsrichtung der Längsnuten 5, 6 erstreckende Schraube 7 miteinander verbunden sind.

Diese Schraube 7 ist durch eine Durchgangsbohrung 10 des Nutsteines 4 in Achsrichtung der Profilstäbe 1, 2 geführt und in eine Gewindebohrung 17 der Anschlussleiste 3 eingeschraubt.

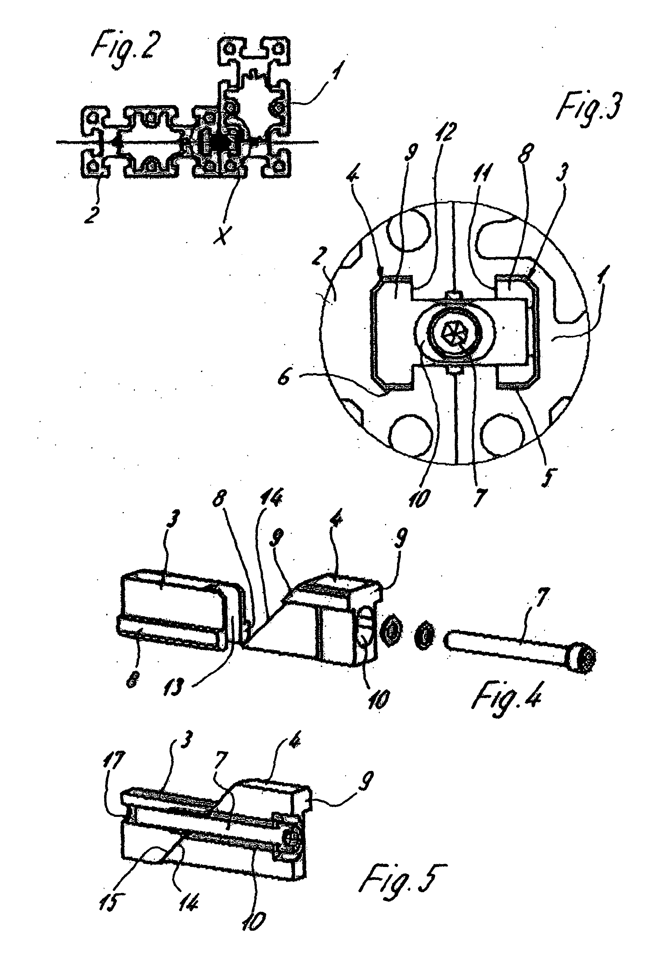

Auf den einander abgewandten Längsseiten weisen der Nutstein 4 und die Anschlussleiste 3 jeweils in den äußeren Randbereichen Klemmkragen 8, 9 auf, die in Funktionsstellung (Figur 3) jeweils an eine Hinterschnittschulter 11, 12 der zugeordneten Längsnut 5, 6 anliegt. Die Figur 3 gibt den Teilausschnitt X der Figur 2 wieder.

Wie insbesondere aus den Figuren 4 und 5 ersichtlich ist, sind die Anschlussleiste 3 und der Nutstein 4 auf den einander zugewandten Stirnseiten jeweils mit einer Schräge 14, 15 versehen, die in ihrer Formgebung einander angepasst sind und die mittels der Schraube 7 gegeneinander gepresst sind. Die Schrägen 14, 15 verlaufen unter einem Winkel von etwa 30° bis 60°, vorzugsweise 45°.

Bei diesem Ausführungsbeispiel bildet die Schräge 15 den Grund eines Schlitzes 13 in der Anschlussleiste 3, dessen Seitenwände den Nutstein 4 seitlich umgreifen, so dass dieser praktisch in die Anschlussleiste 3 eingesteckt ist. Hierdurch ergibt sich in Funktionsstellung eine gewisse Überdeckung der Klemmkragen 8, 9, wodurch eine hohe Kraftaufnahme möglich ist.

Zur Montage des Profilverbinders werden die locker miteinander verschraubten Anschlussleiste 3 und Nutstein 4 in die Längsnuten 5, 6 eingesteckt. Beim anschließenden Festziehen der Schraube 7 werden über die Schrägen 14, 15 der Nutstein 4 und die Anschlussleiste 3 quer zur Schraubrichtung aufeinander zu bewegt unter Anpressung der Klemmkragen 8, 9 an die zugeordneten Hinterschnittschultern 11, 12. Wesentlich hierfür ist, dass die Relativbewegung zwischen dem Nutstein 4 und der Anschlussleiste 3 möglich ist, wozu in dem Nutstein 4 die Durchgangsbohrung 10 in ihrem Querschnitt entsprechend groß dimensioniert ist, so dass eine entsprechende Verschiebung des Nutsteines 4 auf der Schraube 7 möglich ist. Vorzugsweise ist die Durchgangsbohrung 10 im Querschnitt in Klemmrichtung langlochförmig ausgebildet.

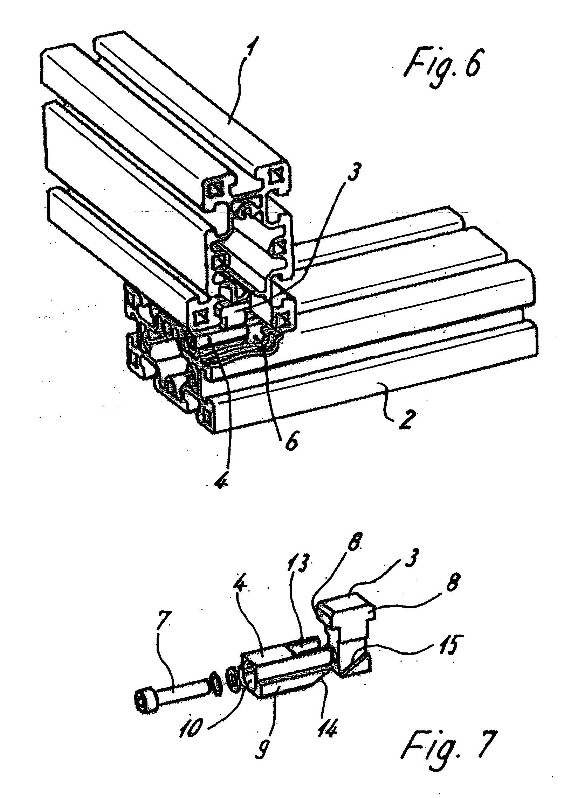

In den Figuren 6 und 7 ist eine ähnliche Ausführungsvariante wie in den Figuren 1 bis 5 dargestellt. Allerdings dient der Profilverbinder gemäß Figuren 6 und 7 der Verbindung von zwei Profilstäben 1, 2 die quer zueinander verlaufen und ebenfalls im Bereich ihrer äußeren Längsseiten aneinander liegen.

Hierbei sind die Klemmkragen 8 der Anschlussleiste 3 quer zum Verlauf der Klemmkragen 9 des Nutsteines 4 verlaufend, so dass die Anschlussleiste 3 problemlos in die entsprechende Längsnut des ersten Profilstabes 1 eingeschoben werden kann.

Beidseitig weist die Anschlussleiste 3 die Schrägen 15 auf, die mit den daran angepassten Schrägen 14 des Nutsteines 4 korrespondieren, wobei die Schrägen 14 seitlich an Wandungen vorgesehen sind, die einen Schlitz 13 begrenzen, durch den der Nutstein 4 ein gabelförmiges Ende erhält, in das die Anschlussleiste 3 eingeschoben ist.

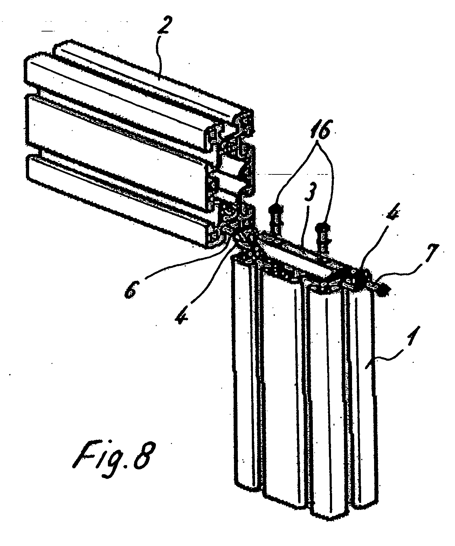

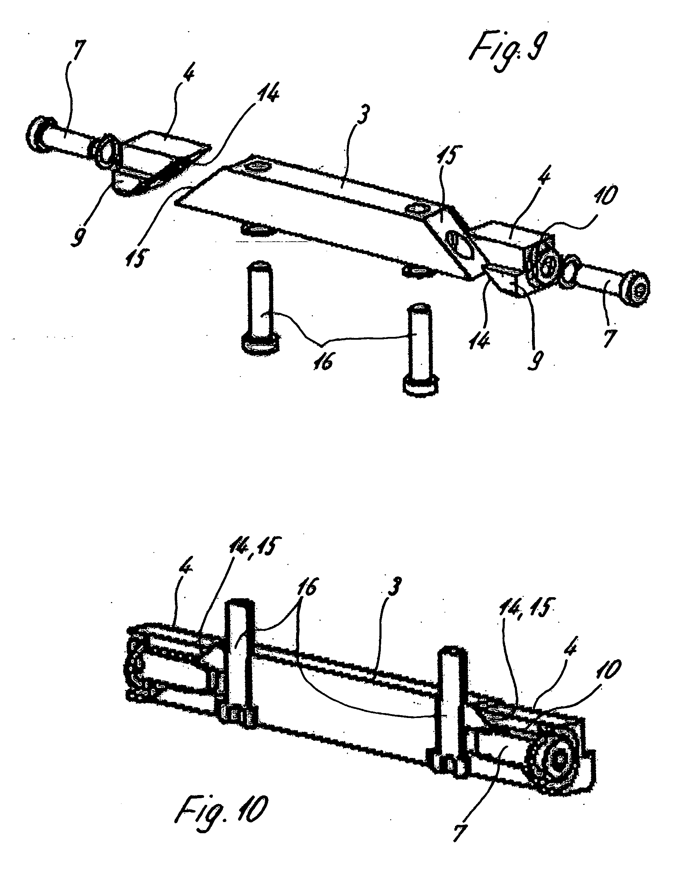

In den Figuren 8 bis 10 ist ein Profilverbinder erkennbar, der dem Verbinden zweier winklig zueinander stehender Profilstäbe 1, 2 dient, wobei der erste Profilstab 1 stirnseitig an einer Außenseite des zweiten Profilstabes 2 anliegt.

Hierbei ist die Anschlussleiste 3 über Klemmschrauben 16 mit dem ersten Profilstab 1 verbunden, die stirnseitig in Schraubkanäle des ersten Profilstabes 1 eingedreht sind.

An beiden Enden ist die Anschlussleiste 3 mit Schrägen 15 versehen, wodurch sich die Anschlussleiste 3 als trapezförmiger Körper darstellt, dessen kürzere Grundfläche an der Stirnseite des ersten Profilstabes 1 anliegt.

Beidseitig liegen an den Schrägen 15 die Nutsteine 4 an, die über ihre Klemmkragen 9 mit der Längsnut 6 des zweiten Profilstabes 2 verbunden sind, in der Art, wie sie zu den vorhergehenden Ausführungsbeispielen beschrieben ist.

Der Einsatz dieses Profilverbinders bietet sich insbesondere dann an, wenn der erste Profilstab 1 keine äußeren Längsnuten aufweist, sondern geschlossene Außenflächen, da die Klemmung über die Schrauben 7 erfolgt, die in Achsrichtung der Längsnut 6 des zweiten Profilstabes verlaufen und somit außerhalb des ersten Profilstabes 1 mittels eines entsprechenden Werkzeuges gedreht werden können.

### Bezugszeichenliste

- 1: erster Profilstab
- 2: zweiter Profilstab
- 3: Anschlussleiste
- 4: Nutstein
- 5: Längsnut
- 6: Längsnut
- 7: Schraube
- 8: Klemmkragen
- 9: Klemmkragen
- 10: Durchgangsbohrung
- 11: Hinterschnittschulter
- 12: Hinterschnittschulter
- 13: Schlitz
- 14: Schräge
- 15: Schräge
- 16: Klemmschraube
- 17: Gewindebohrung

## Patentansprüche

1. Profilverbinder zum lösbaren Verbinden zweier Profilstäbe, mit einer, mit dem ersten Profilstab (1) in Verbindung bringbaren Anschlussleiste (3) und mindestens einem Nutstein (4), der in einer äußeren hinterschnittenen Längsnut (6) des zweiten Profilstäbes (2) festklemmbar ist, wobei Klemmkragen (9) des Nutsteines (4) an gebildeten Hinterschnittschultern (12) der Längsnut (6) anliegen, wobei die Anschlussleiste (3) und der Nutstein (4) jeweils eine Schräge aufweisen, die in Funktionsstellung durch eine in Längsachsrichtung der Längsnut (6) geführte Schraube (7) gegeneinander gepresst sind, und dass die Schraube (7) durch eine Durchgangsbohrung (10) des Nutsteines (4) oder der Anschlussleiste (3) geführt und in eine Gewindebohrung (17) der Anschlussleiste (3) oder des Nutsteines (4) eingeschraubt ist, wobei die Durchgangsbohrung in ihrem Querschnitt so bemessen ist, dass der Nutstein (4) bzw. die Anschlussleiste (3) quer zur Schraube (7) bewegbar ist, **dadurch gekennzeichnet, dass** die Anschlussleiste (3) einen Schlitz (13) aufweist, dessen Grund die Schräge (15) bildet und in den der Nutstein (4) zumindest teilweise eingesteckt ist, oder, dass der Nutstein (4) einen Schlitz (13) ausweist, in den die Anschlussleiste (3) eingesteckt ist, wobei die beiden den Schlitz (13) begrenzenden Seitenwände als Schrägen (14) ausgebildet sind, die an Schrägen (15) der Anschlussleiste (3) anliegen.

2. Profilverbinder nach Anspruch 1, **dadurch gekennzeichnet, dass** die Durchgangsbohrung (10) in Klemmrichtung langlochförmig ausgebildet ist.

3. Profilverbinder nach Anspruch 1 oder 2, **dadurch gekennzeichnet, dass** die Anschlussleiste (3) den Klemmkragen (9) des Nutsteines (4) gegenüber liegend ebenfalls Klemmkragen (8) aufweist, die an Hinterschnittschultern (11) des ersten Profilstabes (1) anpressbar.

4. Profilverbinder nach einem der vorhergehenden Ansprüche, **dadurch gekennzeichnet, dass** sich die Klemmkragen (9) des Nutsteines (4) und die Klemmkragen (8) der Anschlussleiste (3) zumindest teilweise in der Projektion überdecken.

5. Profilverbinder nach einem der vorhergehenden Ansprüche, **dadurch gekennzeichnet, dass** die Schrägen (14, 15) einander angepasst sind.

6. Profilverbinder nach einem der vorhergehenden Ansprüche, **dadurch gekennzeichnet, dass** der Nutstein (4) als trapezförmiger Körper mit einseitiger Schräge ausgebildet ist, wobei die Klemmkragen (9) an der kürzeren Grundseite vorgesehen sind.

7. Profilverbinder nach einem der vorhergehenden Ansprüche, **dadurch gekennzeichnet, dass** die Klemmkragen (8) der Anschlussleiste (3) quer zu den Klemmkragen (9) des Nutsteines (4) verlaufen.

8. Profilverbinder nach einem der vorhergehenden Ansprüche, **dadurch gekennzeichnet, dass** die Anschlussleiste (3) stirnseitig an den erstern Profilstab (1) anschließbar ist und an beiden Enden mit den Schrägen (15) versehen ist, an denen jeweils ein Nutstein (4) anliegt.

9. Profilverbinder nach einem der vorhergehenden Ansprüche, **dadurch gekennzeichnet, dass** die Anschlussleiste (3) als trapezförmiger Körper ausgebildet ist, dessen kürzere Grundseite eine Anlagefläche am ersten Profilstab (1) bildet.

10. Profilverbinder nach einem der vorhergehenden Ansprüche, **dadurch gekennzeichnet, dass** die Anschlussleiste (3) mittels Klemmschrauben (16), die in Schraubkanäle des ersten Profilstabes (1) eindrehbar sind, an diesen befestigbar ist.

11. Profilverbinder nach einem der vorhergehenden Ansprüche, **dadurch gekennzeichnet, dass** die Anschlussleiste (3) in ihrer Breite etwa der lichten Breite der Längsnut (6) des zweiten Profilstabes entspricht.

12. Profilverbinder nach einem der vorhergehenden Ansprüche, **dadurch gekennzeichnet, dass** die Schrägen (14, 15) unter einem Winkel von etwa 30° bis 60° vorzugsweise 45° verlaufen.

13. Profilverbinder nach einem der vorhergehenden Ansprüche, **dadurch gekennzeichnet, dass** der Nutstein (4) aus zwei Teilen besteht.

14. Profilverbinder nach einem der vorhergehenden Ansprüche, **dadurch gekennzeichnet, dass** der Nutstein (4) in Richtung der Durchgangsbohrung (10) geteilt ist.

## Claims

1. Profile connector for the releaseable connection of two profiled bars, with a connecting strip (3) which can be brought into connection with the first profile bar (1) and with at least one groove block (4) which can be securely clamped in an outer undercut longitudinal groove (6) of the second profiled bar (2), wherein clamping collars (9) of the groove block (4) bear against formed undercut shoulders (12) of the longitudinal groove (6), wherein the connecting strip (3) and the groove block (4) each have a bevel, which bevels are pressed against one another in the operating position by means of a screw (7) guided in the longitudinal axial direction of the longitudinal groove (6), and wherein the screw (7) is guided through a through hole (10) of the groove block (4) or of the connecting strip (3) and is screwed into a threaded hole (17) of the connecting strip (3) or of the groove block (4), wherein the through hole is dimensioned in its cross section such that the groove block (4) or the connecting strip (3) can be moved transversely to the screw (7), **characterized in that** the connecting strip (3) has a slot (13) whose bottom forms the bevel (15) and into which the groove block (4) is at least partially inserted, or **in that** the groove block (4) has a slot (13) into which the connecting strip (3) is inserted, wherein the two side walls bounding the slot (13) are formed as bevels (14) which bear against bevels (15) of the connecting strip (3).

2. Profile connector according to Claim 1, **characterized in that** the through hole (10) is slot-shaped in the clamping direction.

3. Profile connector according to Claim 1 or 2, **characterized in that**, situated opposite the clamping collars (9) of the groove block (4), the connecting strip (3) likewise has clamping collars (8) which can be pressed against undercut shoulders (11) of the first profiled bar (1).

4. Profile connector according to one of the preceding claims, **characterized in that** the clamping collars (9) of the groove block (4) and the clamping collars (8) of the connecting strip (3) at least partially overlap in projection.

5. Profile connector according to one of the preceding claims, **characterized in that** the bevels (14, 15) are adapted to one another.

6. Profile connector according to one of the preceding claims, **characterized in that** the groove block (4) is designed as a trapezoidal body with a bevel on one side, wherein the clamping collars (9) are provided on the shorter base side.

7. Profile connector according to one of the preceding claims, **characterized in that** the clamping collars (8) of the connecting strip (3) extend transversely to the clamping collars (9) of the groove block (4).

8. Profile connector according to one of the preceding claims, **characterized in that** the connecting strip (3) can be connected at its end side to the first profiled bar (1) and is provided at both ends with the bevels (15), against which a respective groove block (4) bears.

9. Profile connector according to one of the preceding claims, **characterized in that** the connecting strip (3) is formed as a trapezoidal body whose shorter base side forms a bearing surface on the first profiled bar (1).

10. Profile connector according to one of the preceding claims, **characterized in that** the connecting strip (3) can be fastened to the first profiled bar (1) by means of clamping screws (16) which can be screwed into screw channels of this first profiled bar.

11. Profile connector according to one of the preceding claims, **characterized in that** the connecting strip (3) corresponds in its width approximately to the clear width of the longitudinal groove (6) of the second profiled bar.

12. Profile connector according to one of the preceding claims, **characterized in that** the bevels (14, 15) extend at an angle of about 30° to 60°, preferably 45°.

13. Profile connector according to one of the preceding claims, **characterized in that** the groove block (4) consists of two parts.

14. Profile connector according to one of the preceding claims, **characterized in that** the groove block (4) is divided in the direction of the through hole (10).

## Revendications

1. Raccord pour profilés destiné à raccorder de manière amovible deux barres profilées, comportant une latte de raccordement (3), adapté pour être reliée à la première barre profilée (1), et au moins un coulisseau rainuré (4), qui peut être bloqué dans une rainure longitudinale (6) extérieure détalonnée de la deuxième barre profilée (2), les rebords de serrage (9) du coulisseau rainuré (4) étant en appui contre des épaulements de détalonnage (12) formés sur la rainure longitudinale (6), dans lequel la latte de raccordement (3) et le coulisseau rainuré (4) comportent chacun un plan incliné, qui, dans la position fonctionnelle, sont pressés l'un contre l'autre par une vis (7) guidée dans la direction de l'axe longitudinal de la rainure longitudinale (6), et la vis (7) est guidée à travers un alésage débouchant (10) du coulisseau rainuré (4) ou de la latte de raccordement (3) et est vissée dans un alésage taraudé (17) de la latte de raccordement (3) ou du coulisseau rainuré (4), ledit alésage débouchant étant dimensionné dans sa section de telle sorte que le coulisseau rainuré (4) ou la latte de raccordement (3) peut être déplacé transversalement à la vis (7), **caractérisé en ce que** la latte de raccordement (3) comporte une fente (13), dont le fond forme le plan incliné (15) et dans laquelle le coulisseau rainuré (4) est enfiché au moins partiellement, ou **en ce que** le coulisseau rainuré (4) comporte une fente (13), dans laquelle est enfichée la latte de raccordement (3), les deux parois latérales délimitant la fente (13) étant réalisées sous forme de plans inclinés (14), qui sont en appui contre les plans inclinés (15) de la latte de raccordement (3).

2. Raccord pour profilés selon la revendication 1, **caractérisé en ce que** l'alésage débouchant (10) est réalisé sous forme de trou oblong dans le sens de serrage.

3. Raccord pour profilés selon la revendication 1 ou 2, **caractérisé en ce que** la latte de raccordement (3) comporte également des rebords de serrage (8), qui sont opposés aux rebords de serrage (9) du coulisseau rainuré (4) et qui peuvent être pressés contre les épaulements de détalonnage (11) de la première barre profilée (1).

4. Raccord pour profilés selon l'une quelconque des revendications précédentes, **caractérisé en ce que** les rebords de serrage (9) du coulisseau rainuré (4) et les rebords de serrage (8) de la latte de raccordement (3) se recouvrent au moins en partie en projection.

5. Raccord pour profilés selon l'une quelconque des revendications précédentes, **caractérisé en ce que** les plans inclinés (14, 15) sont ajustés l'un à l'autre.

6. Raccord pour profilés selon l'une quelconque des revendications précédentes, **caractérisé en ce que** le coulisseau rainuré (4) est réalisé sous la forme d'un corps trapézoïdal avec un plan incliné unilatéral, les rebords de serrage (9) étant agencés sur la base la plus courte.

7. Raccord pour profilés selon l'une quelconque des revendications précédentes, **caractérisé en ce que** les rebords de serrage (8) de la latte de raccordement (3) s'étendent transversalement aux rebords de serrage (9) du coulisseau rainuré (4).

8. Raccord pour profilés selon l'une quelconque des revendications précédentes, **caractérisé en ce que** la latte de raccordement (3) peut être raccordée du côté frontal à la première barre profilée (1) et, au niveau de ses deux extrémités, est munie des plans inclinés (15), contre chacun desquels prend appui un coulisseau rainuré (4).

9. Raccord pour profilés selon l'une quelconque des revendications précédentes, **caractérisé en ce que** la latte de raccordement (3) est réalisée sous la forme d'un corps trapézoïdal, dont la base la plus courte forme une surface d'appui sur la première barre profilée (1).

10. Raccord pour profilés selon l'une quelconque des revendications précédentes, **caractérisé en ce que** la latte de raccordement (3) peut être fixée à la première barre profilée (1) au moyen de vis de serrage (16), qui peuvent être vissées dans des conduits de vissage de la première barre profilée (1).

11. Raccord pour profilés selon l'une quelconque des revendications précédentes, **caractérisé en ce que** la latte de raccordement (3) a une largeur qui correspond à peu près à la largeur intérieure de la rainure longitudinale (6) de la deuxième barre profilée.

12. Raccord pour profilés selon l'une quelconque des revendications précédentes, **caractérisé en ce que** les plans inclinés (14, 15) s'étendent en formant un angle d'environ 30° à 60°, de préférence 45°.

13. Raccord pour profilés selon l'une quelconque des revendications précédentes, **caractérisé en ce que** le coulisseau rainuré (4) est formé de deux parties.

14. Raccord pour profilés selon l'une quelconque des revendications précédentes, **caractérisé en ce que** le coulisseau rainuré (4) est scindé dans la direction de l'alésage débouchant (10).
